# EUROPÄISCHE PATENTSCHRIFT

(11) **EP 0 692 946 B1**
(45) Veröffentlichungstag und Bekanntmachung des Hinweises auf die Patenterteilung: **05.03.1997**
(21) Anmeldenummer: 94911919.2
(22) Anmeldetag: 18.03.1994
(51) Int. Cl.: A47J 47/14

(54) **AMBULANTE VERKAUFSEINRICHTUNG**
AMBULANT SALES FACILITY
DISPOSITIF DE VENTE AMBULANTE

(30) Priorität: 08.04.1993 DE 9305318 U
(43) Veröffentlichungstag der Anmeldung: 24.01.1996
(73) Patentinhaber: Wagner, Peer, 04229 Leipzig (DE)
(72) Erfinder: Wagner, Peer, 04229 Leipzig (DE)
(74) Vertreter: Bockhorni, Josef, Dipl.-Ing. Patentanwälte
(86) Internationale Anmeldenummer: EP9400857
(87) Internationale Veröffentlichungsnummer: WO9423630

(56) Entgegenhaltungen:
- AU-B- 623 579
- AU-D- 1 529 088
- CA-A- 1 185 937
- GB-A- 723 716
- US-A- 1 542 163
- US-A- 1 601 624
- US-A- 5 123 335

## Beschreibung

Die Erfindung betrifft eine ambulante Verkaufseinrichtung zur Zubereitung und zum Verkauf von frisch zubereiteten Snacks, wie Bratwürsten und anderer Grillware sowie von Kalt- und Heißgetränken.

Ambulante Verkaufseinrichtungen, z. B. die bekannten "Bauchläden", dienen dazu, die angebotene Ware z. B. auf Volksfesten, in Fußgängerzonen und anderen stark frequentierten Bereichen möglichst nahe an die Kunden heranzutragen. Im Unterschied zu sogenannten Ständen zeichnen sich solche Verkaufseinrichtungen durch eine hohe Mobilität aus, da ihr Standort bedarfsweise schnell gewechselt werden kann. Als ambulante Verkaufseinrichtungen sind auch an Schulterriemen vor dem Bauch tragbare isolierte Kessel bekannt, die mit heißem Wasser gefüllt sind, und aus denen z. B. warme Würste und dgl. frisch verkauft werden.

In der AU-B-623 579 wird ferner eine ambulante Verkaufseinrichtung beschrieben, bei der die Ware, die zuvor außerhalb der ambulanten Verkaufseinrichtung erhitzt wurde, innerhalb der ambulanten Verkaufseinrichtung durch Beheizung mit einem festen oder gelförmigen Brennstoff über einen wesentlich längeren Zeitraum warmgehalten wird, als dies z. B. mit den erwähnten Warmwasserkesseln möglich war.

Zur Frischzubereitung von heißen Snacks, wie Bratwürsten sowie von Heiß- und Kaltgetränken unmittelbar auf der ambulanten Verkaufseinrichtung ist aber auch diese Einrichtung nach AU-B-623 579 nicht geeignet.

Dies liegt darin begründet, daß zur Erzielung eines für den Verkauf lohnenden Durchsatzes an Ware eine relativ große Verkaufsfläche vorhanden sein muß und diese Größe infolge der damit verbundenen Last für den Träger bisher als für die Schaffung einer ambulanten Verkaufseinrichtung ungeeignet betrachtet wurde.

Der Erfindung liegt deshalb die Aufgabe zugrunde, dieses Vorurteil zu überwinden und entsprechende Voraussetzungen für eine ambulante Verkaufseinrichtung zur Zubereitung und zum Verkauf von frisch zubereiteten Snacks, wie z. B. Grillwaren sowie von Kalt- und Heißgetränken zu schaffen.

Die Aufgabe wird durch die Merkmale des Patentanspruches 1 gelöst. Zweckmäßige Ausgestaltungen der Erfindung sind Merkmale der Unteransprüche.

Die Erfindung soll nachfolgend anhand zweier Ausführungsbeispiele in Verbindung mit den Zeichnungen näher erläutert werden.

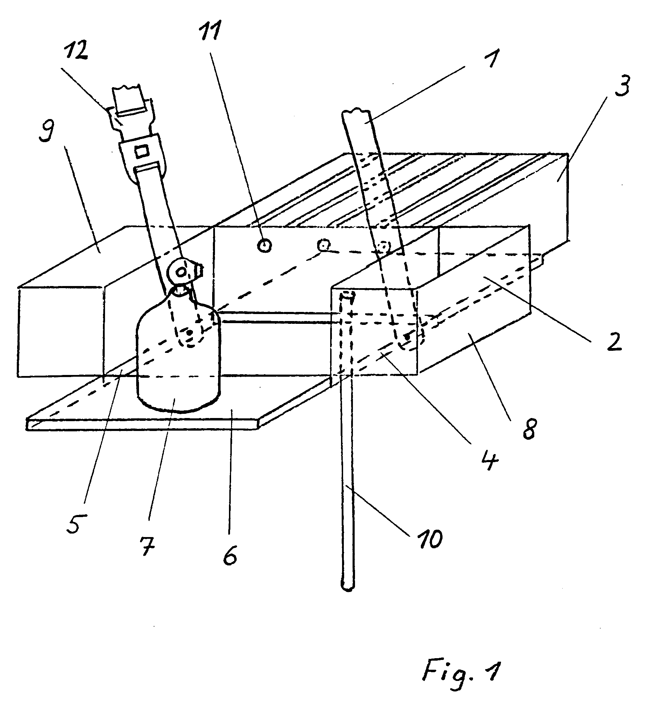

- Figur 1: zeigt schematisch eine erfindungsgemäße Einrichtung zum Grillen von Bratwürsten und dgl. in perspektivischer Rückansicht.
- In Figur 2: ist eine ähnliche Einrichtung zur Kühlung und zum Verkauf von Kaltgetränken in schematischer Seitenansicht dargestellt.
- Figur 3a: zeigt in Seitenansicht eine Rollplatte, die die Bewegung der Verkaufseinrichtung erleichtert.
- Figur 3b: ist die Draufsicht auf die Rollplatte nach Figur 3a.

In einer ersten Ausführungsform wird die Erfindung durch eine an einem oder mehreren Nacken- und/oder Schultergurten 1 in Bauchhöhe gehaltene Tragplatte 2 realisiert, auf der der Grill 3 vor dem Verkäufer und von diesem gut bedienbar aufmontiert ist. An der Tragplatte sind weiterhin seitlich rechts und links je ein Seitenholm 4 und 5 montiert und am Verkäufer vorbei waagerecht nach hinten geführt. Zwischen diesen Seitenholmen ist hinter dem Verkäufer eine waagerechte Lastausgleichsplatte 6, die bei Gasbetrieb zum Aufstellen und Befestigen der Heizgasflasche 7 dient, montiert. Außerdem sind seitlich, rechts und links vom Verkäufer, Vorratsbehälter 8 und 9 für die ungegrillte Ware sowie für Beilagen, Würzsaucen, Senf, Pappteller, Servietten usw. angebracht. Die Befestigungspunkte des oder der Gurte(s) 1 an der Grilleinrichtung sind so gewählt, daß der Grill 3 und die Vorratsbehälter 8 und 9 eine günstige Lage zur Bedienung durch den Verkäufer haben. Die Lastausgleichsplatte 6 hinter dem Verkäufer hat einen solchen Abstand, daß sich die gesamte Einrichtung, wenn sie der Verkäufer um Nacken und/oder Schultern trägt, etwa in Waage befindet.

Zur Lastabtragung dient zusätzlich eine Stütze 10, die an der Tragplatte 2 befestigt ist und senkrecht nach unten verläuft. Sie ist zweckmäßigerweise teleskopartig auszieh- und feststellbar und kann in dieser Weise verschiedenen Körpergrößen der Verkäufer angepaßt werden. Das untere Ende der Stütze 10 kann seitlich in den Schuh des Verkäufers eingesteckt werden. Der Schuh kann zu diesem Zweck entsprechend präpariert sein, d. h. er kann mit einem Aufnahmeteil zum Einstecken des unteren Teils der Stütze 10 versehen sein. Der Zusammenbau der Teile geschieht zweckmäßigerweise über leicht und ohne Werkzeuge zu handhabende Verbindungselemente, wie Flügelmuttern, Schnellspanneinrichtungen oder dgl.

Die Gurte sind über aus dem Automobilbau von den Sicherheitsgurten her bekannte Schnellverschlüsse 12 leicht zu öffnen und zu schließen sowie in ihrer Länge verstellbar.

Der Grill wird zweckmäßig mit umweltfreundlichem Flüssiggas betrieben. Die Verbindungsleitung von der Gasflasche zu den im Grill befindlichen Brennern und die Brenner selbst sind aus Gründen der Übersichtlichkeit in der Zeichnung nicht dargestellt. Der Verkäufer kann die Wärmezufuhr zum Grill über die Regler 11 regulieren.

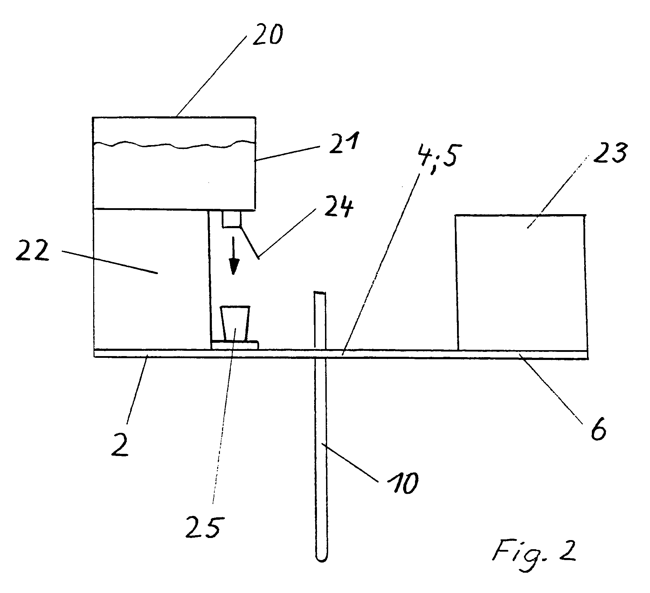

Die in Figur 2 dargestellte zweite Ausführungsform ist mit der ersten Ausführungsform in allen wichtigen Einzelheiten identisch. Die Tragplatte 2 wird ebenfalls an einem oder mehreren Nacken- bzw. Schultergurten, die aus Gründen der Übersichtlichkeit nicht dargestellt sind, in Bauchhöhe gehalten. Die Seitenholme 4 und 5 sind ebenfalls in ihrem vorderen Bereich mit der Tragplatte 2 verbunden und werden seitlich am Verkäufer vorbei waagerecht nach hinten geführt. Hinter dem Verkäufer ist zwischen den hinteren Bereichen der Seitenholme 4 und 5 die waagerechte Lastausgleichsplatte 6 montiert. Auf der Tragplatte 2 ist, vor dem Verkäufer, der Getränkedispenser 20 angeordnet, in dem das Kaltgetränk 21 ständig durch den nicht näher dargestellten Kühlkreislauf 22 in Umlauf gehalten wird. Die für den Kühlkreislauf notwendige Energieversorgung 23, z. B. in Form eines Sammlers, eines Generators oder in Form von Heizgas, ist auf der Ausgleichsplatte 6 angeordnet. Durch Bedienen des Auslaufhebels 24 läuft das Getränk in den Becher 25 und ist zum Verkauf bereit. Auch bei dieser Verkaufseinrichtung befinden sich an den Seitenholmen rechts und links vom Verkäufer (nicht dargestellte) Vorratsbehälter für Becher, Trinkhalme usw.

In analoger Weise kann auch eine ambulante Einrichtung zur Frischzubereitung und zum Verkauf von Heißgetränken aufgebaut werden.

Als Werkstoffe für die Einrichtung kommen vorzugsweise korrosionsbeständige, hygienisch unbedenkliche Materialien, die vor allem auch leicht sein sollen, in Betracht. Das sind vor allem Edelstahl, Aluminium oder Titan für tragende bzw. wärmebeanspruchte Teile und Aluminium oder Kunststoffe für die übrigen Teile.

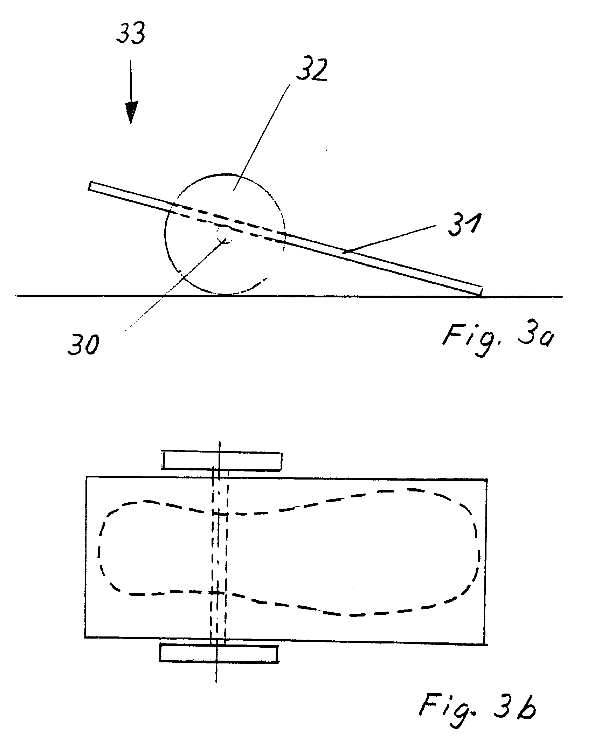

Um die Mobilität der Verkaufseinrichtung weiter zu erhöhen, kann unter dem Schuh des Verkäufers, in den die Stütze 10 eingesteckt ist, die in den Figuren 3a und 3b im Prinzip dargestellte Rollplatte 33 angeordnet werden. Die Platte 31 hat eine im wesentlichen rechteckige Form. Die Achse 30, die mit der Platte 31 verbunden ist, befindet sich quer zu deren Längsausdehnung in einem Abstand von der hinteren Querkante von etwa 1/3 der Gesamtlänge. Dadurch ruht die Last der in den Schuh eingesteckten Stütze 10 der Verkaufseinrichtung auf dem vorderen Bereich der Platte und drückt deren Vorderkante gegen den Erdboden, so daß sie gegen Abrollen gesichert ist. Bei Bedarf kann der Verkäufer durch Drücken mit dem Absatz des Schuhes die Vorderkante der Platte 31 anheben und dann die Rollplatte 33 mit der aufliegenden Last mittels der Rollen 32 in beliebige Richtung bewegen und mit dem Fuß lenken.

Die beschriebene ambulante Verkaufseinrichtung läßt sich gut zum Einsatzort transportieren, ist aufgrund der einfachen Montage schnell einsatz- und betriebsbereit und hat einen überraschend hohen Durchsatz an Ware, so daß diese schnell und frisch zum Verbraucher gelangt und auf Volksfesten und dgl. ein großer Bedarf befriedigt werden kann.

## Patentansprüche

1. Ambulante Verkaufseinrichtung zur Zubereitung und zum Verkauf von frisch zubereiteten Snacks, wie Bratwürsten und anderer Grillware, sowie von Kalt- und Heißgetränken, wobei die gesamte Einrichtung durch Nacken- und/oder Schultergurte (1) mit dem Verkäufer verbunden ist, **dadurch gekennzeichnet, daß** eine vor dem Verkäufer befindliche Tragplatte (2), auf der eine Zubereitungseinrichtung (3, 20) angeordnet ist, über je einen seitlich am Verkäufer vorbei nach hinten führenden rechten und linken Seitenholm (4, 5) mit einer waagerecht hinter dem Verkäufer befindlichen Lastausgleichsplatte (6) verbunden ist, daß rechts und links vom Verkäufer, in etwa gleicher Höhe wie die Seitenholme (4, 5), Vorratsbehälter (8, 9) angebracht sind, daß die Lastausgleichsplatte (6) von der Tragplatte (2) einen solchen Abstand hat, daß sich die gesamte Einrichtung, wenn sie der Verkäufer um den Nacken und/oder die Schulter trägt, etwa in Waage befindet und daß eine Stütze (10), die an der Tragplatte (2) befestigt ist und senkrecht nach unten verläuft, zur zusätzlichen Lastabtragung dient.

2. Ambulante Verkaufseinrichtung nach Anspruch 1, **dadurch gekennzeichnet, daß** die Stütze (10) seitlich in einen Schuh des Verkäufers eingesteckt ist.

3. Ambulante Verkaufseinrichtung nach Anspruch 2, **dadurch gekennzeichnet, daß** die Stütze (10) in ein im Schuh des Verkäufers angebrachtes Aufnahmeteil eingesteckt ist.

4. Ambulante Verkaufseinrichtung nach einem oder mehreren der vorhergehenden Ansprüche, **dadurch gekennzeichnet,** **daß** die Stütze (10) teleskopartig auszieh- und feststellbar ist.

5. Ambulante Verkaufseinrichtung nach einem oder mehreren der vorhergehenden Ansprüche, **dadurch gekennzeichnet, daß** die Stütze (10) an ihrem unteren Ende fahr- oder gleitbar und bedarfsweise feststellbar ist.

6. Ambulante Verkaufseinrichtung nach einem oder mehreren der vorhergehenden Ansprüche, **gekennzeichnet durch** eine Rollplatte (33), die unter der Laufsohle des Schuhs des Verkäufers, in dem die Stütze (10) eingesteckt ist, angeordnet ist, die aus einer im wesentlichen rechteckigen Platte (31) besteht, in deren hinterem Bereich, quer zur Längsausdehnung der Platte (31), eine Achse (30) mit ihr verbunden ist und Rollen (32) an den beiden Enden der Achse (30), seitlich der Platte (31), um die Achse (30) drehbar befestigt sind.

7. Ambulante Verkaufseinrichtung nach einem oder mehreren der vorhergehenden Ansprüche, **dadurch gekennzeichnet, daß** ein Grill (3) auf der Tragplatte (2) montiert ist, der mit Flüssiggas betrieben wird und die Gasflasche (7) auf der Lastausgleichsplatte (6) befestigt ist.

8. Ambulante Verkaufseinrichtung nach einem oder mehreren der Ansprüche 1 bis 6, **dadurch gekennzeichnet, daß** ein Getränkedispenser (20) mit einem Kühlkreislauf (22) auf der Tragplatte (2) und eine Energieversorgung (23) auf der Ausgleichsplatte (6) angeordnet sind.

9. Ambulante Verkaufseinrichtung nach einem oder mehreren der Ansprüche 1 bis 6, **dadurch gekennzeichnet, daß** ein Heißgetränkebereiter auf der Tragplatte (2) und eine Energieversorgung (23), z. B. eine Flüssiggasflasche, auf der Ausgleichsplatte (6) angeordnet sind.

10. Ambulante Verkaufseinrichtung nach einem oder mehreren der vorhergehenden Ansprüche, **dadurch gekennzeichnet, daß** an den Seitenholmen (4, 5) seitlich außen, rechts und links vom Verkäufer, Vorratsbehälter (8, 9) zur Aufnahme von unzubereiteter Ware, Beilagen, Verpackungsmitteln, Hygieneartikeln usw. angeordnet sind.

11. Ambulante Verkaufseinrichtung nach einem oder mehreren der vorhergehenden Ansprüche, **dadurch gekennzeichnet, daß** die einzelnen Elemente über Flügelschrauben bzw. Flügelmuttern und/oder Schnellspannvorrichtungen verbunden sind.

12. Ambulante Verkaufseinrichtung nach einem oder mehreren der vorhergehenden Ansprüche, **dadurch gekennzeichnet, daß** der oder die Gurt(e) über einen Schnellverschluß, ähnlich denen bei Sicherheitsgurten im Automobilbau, verbindbar und längenverstellbar ist/sind.

13. Ambulante Verkaufseinrichtung nach einem oder mehreren der vorhergehenden Ansprüche, **dadurch gekennzeichnet, daß** für die tragenden bzw. wärmebeanspruchten Teile Edelstahl, Aluminium oder Titan und für die übrigen Teile Aluminium oder Kunststoff verwendet werden.

## Claims

1. Ambulant sales facility for the preparation and sale of freshly prepared snacks like Bratwursts and other grilled items, as well as cold and hot drinks, wherby the whole facility is supported by the vendor with neck and/or shoulder straps (1) characterized by tile fact that it establishes a carrying surface (2) with a food preparation installation (3, 20) in front of the vendor, which is linked to the load equalizing plate (6) behind the vendor by right and left horizontal side bars (4, 5), leading past the vendor's right and left sides; that there are supply containers (8, 9) left and right of the vendor at about the level of the side bars (4, 5); that the load equalizing plate (6) has a certain distance from the carrying surface (2) so that it is in equilibrium when the vendor carries it around the neck or shoulder; and that a support (10) fastened to the carrying surface (2) and extending down vertically serves for additional load abatement.

2. Ambulant sales facility like claim 1, identified by the fact, that the support (10) is inserted into the side of the vendor's shoe.

3. Ambulant sales facility like claim 2, distinguished by the fact, that the support (10) is inserted into a receptacle on the side of the vendor's shoe.

4. Ambulant sales facility like one or several of the previous claims, recognized by the fact, that the support (10) can be telescopically extended and fastened.

5. Ambulant sales facility like one or several of the previous claims, characterized by the fact, that the support (10) has a lower end which is driveable or can glide, and on demand can be locked.

6. Ambulant sales facility like one or several of the previous claims, characterized by a roller plate (33) which is situated under the sole of the vendor's shoe in which the support (10) is inserted which essentially consists of a rectangular plate (31), where on the rear area an axis is adjoined extending crosswise over the length of the plate (31) and with rollers (32) fastened on both ends of the axis (30) extending beyond the plate (31) which turn around the axis (30).

7. Ambulant sales facility like one or several of the previous claims, distinguished by the fact, that a grill (3) is mounted on the carrying surface (2) which runs on propane gas and the gas bottle is installed on the load equalizing plate (6).

8. Ambulant sales facility like one or several of the claims 1 through 6, identified by the fact, that a drink dispenser (20) with a refrigerating circuit (22) is mounted on the carrying surface, while the energy supply (23) is located on the load equalizing plate (6).

9. Ambulant sales facility like one or several of the claims 1 through 6, distinguished by the fact, that a hot drink preparation device is mounted on the carrying surface and all energy supply (23), e. g. a bottle of propane gas is located on the load equalizing plate (6).

10. Ambulant sales facility like one or several of the previous claims, characterized by the fact, that supply containers (8, 9) for storing raw ingredients, condiments, wrapping materials, articles for promoting hygienic conditions, etc. ar arranged right and left of the vendor on the outside of the side bars (4, 5).

11. Ambulant sales facility like one or several of the previous claims, recognized by the fact, that the individual elements are connected to each other with wing nuts and/or bolts and/or fast gripping clamps.

12. Ambulant sales facility like one or several of the previous claims, identified by the fact, that the strap(s) close(s) with snap buckles and can be adjusted, similar to those used in automobile construction.

13. Ambulant sales facility like one or several of the previous claims, recognized by the fact, stainless steel, aluminium, or titanium was used for supporting parts or for parts subjected to heat, and aluminium or plastic for all the others.

## Revendications

1. Dispositif de vente ambulante pour préparer et vendre des casse-croûte frais comme des saucisses et autres produits à griller ainsi que des boissons froides et chaudes, l'ensemble du dispositif étant relié au vendeur par une sangle de nuque ou d'épaule (1), caractérisé en ce qu'une plaque d'appui (2) se trouvant devant le vendeur et sur laquelle est disposé un dispositif de préparation (3, 20) est reliée à une plaque de répartition de charge (6) située horizontalement derrière le vendeur, à chaque fois par l'intermédiaire d'un longeron latéral droit et gauche (4, 5) qui passe latéralement devant le vendeur et conduit vers l'arrière, en ce qu'à droite et à gauche du vendeur, à pratiquement la même hauteur que les longerons latéraux (4, 5) sont placés des réservoirs (8, 9), en ce que la plaque de répartition de charge (6) possède un tel écartement par rapport à la plaque d'appui (2) que l'ensemble du dispositif, lorsque le vendeur le porte autour de la nuque et/ou de l'épaule, se trouve pratiquement en équilibre et en ce qu'un support (10) qui est fixé à la plaque d'appui (2) et est vertical vers le bas sert d'amortissement de charge supplémentaire.

2. Dispositif de vente ambulante selon la revendication 1, caractérisé en ce que le support (10) est inséré latéralement dans une chaussure du vendeur.

3. Dispositif de vente ambulante selon la revendication 2, caractérisé en ce que le support (10) est inséré dans une pièce de réception logée dans la chaussure du vendeur.

4. Dispositif de vente ambulante selon l'une ou plusieurs des revendications précédentes, caractérisé en ce que le support (10) est coulissant de façon télescopique et peut être bloqué.

5. Dispositif de vente ambulante selon l'une ou plusieurs des revendications précédentes, caractérisé en ce que le support (10) est mobile ou coulissant à son extrémité inférieure et peut être bloqué en cas de besoin.

6. Dispositif de vente ambulante selon l'une ou plusieurs des revendications précédentes, caractérisé par une plaque de roulement (33) qui est disposée sous la semelle de la chaussure du vendeur, chaussure dans laquelle est inséré le support (10) qui se compose d'une plaque essentiellement rectangulaire (31) dans la zone arrière duquel un axe (30) est relié à elle, perpendiculairement à l'extension longitudinale de la plaque (31) et des rouleaux (32) sont fixés de façon mobile autour de l'axe (30) aux deux extrémités de l'axe (30), latéralement à la plaque (31).

7. Dispositif de vente ambulante selon l'une ou plusieurs des revendications précédentes, caractérisé en ce qu'un grill (3) est monté sur la plaque d'appui (2), grill qui fonctionne avec du gaz combustible liquéfié et en ce que la bouteille de gaz (7) est fixée sur la plaque de répartition de la charge (6).

8. Dispositif de vente ambulante selon l'une ou plusieurs des revendications 1 à 6, caractérisé en ce qu'un distributeur de boissons (20) avec un circuit de refroidissement (22) est disposé sur la plaque d'appui (2) et une alimentation en énergie (23) sur la plaque de répartition (6).

9. Dispositif de vente ambulante selon l'une ou plusieurs des revendications 1 à 6, caractérisé en ce qu'un préparateur de boissons chaudes est disposé sur la plaque d'appui (2) et une alimention en énergie (23), par exemple une bouteille de gaz combustible liquéfié, sur la plaque de répartition (6).

10. Dispositif de vente ambulante salon l'une ou plusieurs des revendications précédentes, caractérisé en ce que des réservoirs (8, 9) destinés à recevoir des produits non préparés, des garnitures, des moyens d'emballage, des articles d'hygiène, etc. sont disposés sur les longerons latéraux (4, 5), latéralement à l'extérieur, à droite et à gauche du vendeur.

11. Dispositif de vente ambulante selon l'une ou plusieurs des revendications précédentes, caractérisé en ce que les éléments séparés sont assemblés par l'intermédiaire de vis à oreilles ou d'écrous à oreilles et/ou des dispositifs de serrage rapide.

12. Dispositif de vente ambulante selon l'une ou plusieurs des revendications précédentes, caractérisé en ce que la ou les sangles peuvent être reliées et réglables en longueur par l'intermédiaire d'une boucle à déclic semblable à celles des ceintures de sécurité dans la construction automobile.

13. Dispositif de vente ambulante selon l'une ou plusieurs des revendications précédentes, caractérisé en ce que, pour les parties porteuses ou soumises à des contraintes thermiques, l'on utilise de l'acier spécial, de l'aluminium ou du titane et, pour les autres, de l'aluminium ou de la matière plastique.
